# EUROPEAN PATENT SPECIFICATION

(11) **EP 2 700 724 B1**
(45) Date of publication and mention of the grant of the patent: **20.04.2022**
(21) Application number: 12830673.5
(22) Date of filing: 05.09.2012
(51) Int. Cl.: F27B 9/20, F27D 11/06, F27D 99/00, C21D 1/42, C21D 11/00, C21D 9/04

(54) **METHOD AND APPARATUS FOR HEAT TREATING RAILS**
VERFAHREN UND VORRICHTUNG ZUR WÄRMEBEHANDLUNG VON SCHIENEN
PROCÉDÉ ET DISPOSITIF DE TRAITEMENT THERMIQUE DE RAILS

(30) Priority: 27.10.2011 RU 2011144110
(43) Date of publication of application: 26.02.2014
(73) Proprietor: Scientific Manufacturing Enterprise Tomsk Electronic Company, Ltd., Tomsk 634040 (RU)
(72) Inventor: KHLYST, Sergey Vasilievich, Tomsk 634062 (RU); KUZMICHENKO, Vladimir Mikhaylovich, Tomsk 634006 (RU); SERGEEV, Sergey Mikhaylovich, Tomsk 634062 (RU); SHESTAKOV, Andrey Nikolaevich, Tomsk 634063 (RU); KIRICHENKO, Mikhail Nikolaevich, Tomsk 634062 (RU); PSHENICHNIKOV, Pavel Alexandrovich, Tomsk 634040 (RU); IVANOV, Alexey Gennadievich, Tomsk 634040 (RU); KOZHEVNIKOV, Konstantin Gennadievich, Tomsk 634063 (RU); GONTAR, Alexey Vladimirovich, Tomsk 634049 (RU); KHLYST, Ilya Sergeevich, G. Tomsk 634062 (RU); KIRICHKOV, Anatoliy Alexandrovich, Sverdlovskaya obl. Nizhny Tagil 622049 (RU); KUSHNAREV, Alexey Vladislavovich, Chelyabinskaya obl. Magnitogorsk 455023 (RU); GALITSYN, Georgy Alexandrovich, Ekaterinburg 620144 (RU)
(74) Representative: Sloboshanin, Sergej
(86) International application number: PCT/RU2012/000727
(87) International publication number: WO 2013/036166

(56) References cited:
- WO-A2-2008/042982
- JP-A- H06 299 246
- RU-A- 2011 131 883
- RU-C1- 2 003 705
- RU-C1- 2 023 026
- RU-C2- 2 162 486
- UA-A- 03 888
- None

## Description

The invention relates to the iron and steel industry, more specifically to methods for heat treating of rails, including railway rails.

A method for heat treating of a rail is known (Patent RU 2266966 C21D9/04, C21D11/00, C21D1/02) which comprises passing the heated rail through a cooling portion with entry and exit areas and cooling until the microstructure of the rail is turned into a pearlite or ferrite-pearlite microstructure, characterised in that the rail is passed through a cooling portion consisting of individual, independent cooling modules successively arranged along the length of the cooling portion, with independently adjusted cooling parameters and with interval areas arranged between the cooling modules for removing structural stresses, with means for determining the actual temperature of the rail head. Depending on the corresponding level of the actual temperature of a component in the interval area the cooling intensity parameters are adjusted at least with respect to the subsequent cooling module, to provide a predetermined temperature of the rail head during the entire passage of the cooling portion, which exceeds the critical temperature for forming a bainite structure.

One shortfall of this method is the limited range of cooling speed adjustment in the cooling mode process. Moreover on the surface of head the temperature drop within the first 4-5 s of the cooling mode reaches 350°C-450°C, which can result in a formation of bainite structures in the microstructure of the surface layers of the rail. Thus the basic shortfall of this method are the significant temperature oscillations on the surface of the rail head (from 350°C to 100°C), which can result in inhomogeneity of the macrostructure.

A method for heat treating of a rail is known (Patent UA 61059 C21D9/04) comprising the heating of the rail head along its entire length by high frequency currents while the entire rail is continuously shifted through the heating portion. In the first phase the head is heated to a temperature of 1050-1100°C, whereupon a short-term natural interim cooling to a temperature of 860-820°C within 10-25 seconds is carried out. In the second phase a heating to a temperature of 920-980°C with its stabilisation is carried out, whereupon a first cooling to 480-380°C is executed, wherein the cooling in the temperature interval
from 980°C to 800°C is carried out at a speed of 2-8°C/s,
from 800°C to 600°C is carried out at a speed of 6-14°C/s,
from 600°C to 380°C is carried out at a speed of 4-12°C/s.

Self-tempering is carried out in a temperature interval of 520-400°C within 55-90 seconds. Subsequently a second cooling is carried out, wherein the rail is bent along a curve with maximum curvature at the foot in the heating and cooling zone to an amount providing an equilibrium of the residual stresses developing during heat treatment in the rail head.

One shortfall of this method is that only the head is heated and cooled, not the entire rail profile, which results in the necessity to shift the rails through a hardening machine in a flexible, curved state and in the occurrence of large residual stresses after the heat treatment, and, as a consequence, the necessity of a final straightening of the rail.

Another shortfall is that in the place where the web joins the head of the rail, a transition zone from the heated to the unheated material is formed, where after heat treatment a transition layer with diminished physical and mechanical characteristics is formed.

A heat treating method is known (RU 2162486, international patent classification C21D 9/04) which is selected as the most pertinent prior art.

The method for heat treating of a rail includes preheating each cross-section of the rail made of steel and having a head, a web and a foot, successive or simultaneous postheating or overheating of the rail head and cooling each cross-section of the rail. The preheating of each cross-section of the rail is carried out successively or simultaneously to a temperature exceeding the steel austenitization end temperature, obtaining an identical and homogenous austenitic structure successively or simultaneously in each cross-section of the rail; postheating or overheating of the rail head is carried out to a temperature not exceeding 1050°C, preferably to a temperature not exceeding 1000°C, and it is done in such a way that the medium temperature of each cross-section of the rail head exceeds the medium temperature of the same cross-section of the foot by at least 40°C, the cooling of each cross-section of the rail is carried out successively or simultaneously first to a temperature providing for the achievement of a fine-grained pearlite structure over each cross-section of the rail, and subsequently, if necessary, a successive or simultaneous cooling of each cross-section of the treated rail is carried out under natural conditions to ambient temperature.

One shortfall of this method is that this method does not provide for an adjustment of the heating speed, and an overheating carried out to a temperature not exceeding 1050°C results in a sharp growth of austenite grain, and, as a consequence, in a decrease of the physical and mechanical properties after hardening. Moreover the lack of adjustment of the cooling ability of the medium renders it impossible to obtain a high hardness in a depth of 22 mm from the contact surface of the head. As a result, no sufficient service life of the rails is achieved.

One shortfall of this method is that the preheating is carried out to a temperature exceeding the steel austenitization end temperature, which leads to a sharp change of the volume of material heated through from the surface due to the phased transformation; this can lead to warping and the occurrence of thermal microcracks.

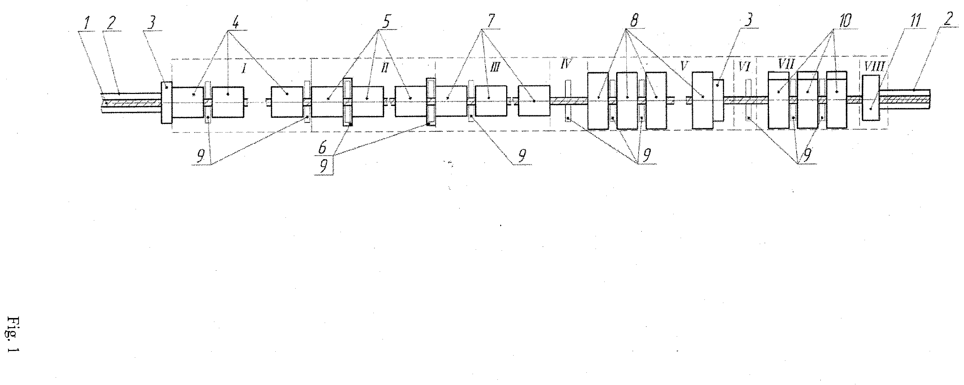

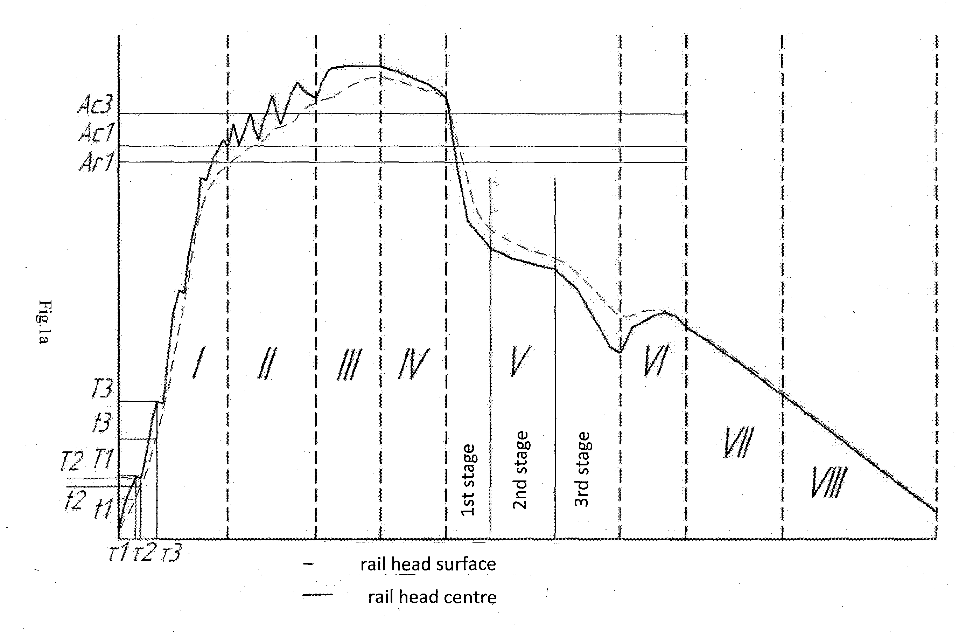

One shortfall of this method is that from the schematic drawing of Fig. 1 it follows that guide rollers must be present, arranged on the surface of the heated rail head, which can result in damage to the contact surface.

A heat treatment apparatus is known which is described in the magazine Industrial Heating, October 1992, which is taken as the most pertinent prior art. The apparatus consists of a device for inductive preheating for austenitizing a rail, a device for preheating the rail, a cooling apparatus with a system of air chambers having independent control of the flow to the rail from above, from the side and from below.

This device makes it possible to carry out heat treatment only of rails of alloy steels. A shortfall of the device is the narrow adjustment interval of the cooling speeds facilitating a heat treatment of the rails with speeds up to 4.5°C/s, since the cooling medium is air, which does not allow to carry out a heat treatment of rails of carbon non-alloy steel, since for the latter significantly higher cooling speeds (12°C/s and more) are necessary.

The document WO 2008/042982 refers to a apparatus and a method of extremely rapid micro-treating of low, medium, and high carbon iron-based alloys and articles by rapid heating and rapid cooling at least a portion of the alloy/article. This heating step involves nearly immediately heating the iron-based alloy to a selected temperature above its austenite conversion temperature. Then, the alloy is immediately quenched, also at an extremely fast rate, on at least a portion of the iron-based alloy in a quenching unit adjacent the heating unit. This procedure forms high strength alloy in a desired area, depending upon where the treatment was performed.

The document RU 2 023 026 discloses a method fro heat treatment of rails wherein the first stage of spheroidizing annealing consists of heating up to 200-300 °C and of 1 to 3 h holding; the second stage does of 1 to 3 heating cycles of 50 to 100 °C/h rate up to 740-780 °C with 1 to 3 h holding followed by 1 to 6 °C/s rate cooling down to 520-420 °C; the third stage consists of 650-700 °C heating followed by 2 to 4 h holding at given temperature, 25 to 50 °C/h rate cooling down to 620 to 540 °C and final air cooling. Surface hardening is carried out by heating up to within 870 to 990°C followed by 7 to 26 °C/s rate cooling within 720 to 460 °C. When rail steel contains 0.82 to 0.85 wt.-% of carbon the second stage of the spheroidizing annealing is carried out as one cycle, when it does 0.86 to 0.92 wt.-% of carbon the annealing comprises two cycles, when it does 0.93 to 0.96 wt.-% it involves three cycles.

**The tasks** of the claimed method and apparatus are:
- increasing the level of the physical and mechanical properties and enhancing the service life of the rail;
- obtaining the required straightness of the rail after heat treatment, making it possible to exclude straightening in a roller straightening machine;
- extending the adjustment range of the cooling speeds in the heat treatment process;
- stabilising the shifting speed of the rail through the apparatus and its required adjustment range depending on the steel grade;
- enabling heat treatment of rails of different grades of rail steels.

The technical result is the creation of a method and an apparatus rendering possible the following:
- controlling individual heating devices in each zone according to a programmed mode, continuously as well as intermittently, depending on the chemical composition of the steel;
- controlling the rail heating modes in a feed-through mode with an alternation of heating zones and temperature equalization zones;
- carrying out a preheating to a temperature from the austenitization start temperature (point Ac₁), without exceeding the austenitization end temperature (point Ac₃);
- carrying out postheating of the head, the web and the foot of the rail by thermal cycling in a temperature interval of the α-γ phase transformation to full austenitization of the entire volume of each cross-section;
- carrying out heat treatment of rails of carbon non-alloy and alloy steels;
- gradually or sharply changing the cooling speed in the heat treatment process during different cooling phases;
- obtaining a homogenous highly dispersed laminar pearlite structure to a depth of more than 22 mm from the contact surface of the head through intensification of the cooling capacity of the gaseous medium in the cooling process;
- achieving on the contact surface a hardness of up to 415 HB, enhancing the plastic and strength properties of the heat treated steel through an increase in the pearlite dispersity;
- changing the cooling speed of each rail portion, exercising an influence on the hardening depth, the structure dispersity and the physical and mechanical properties, due to the fact that each cooling module is provided with a unit for controlling and adjusting the parameters of the cooling medium;
- providing a stable shifting speed of the rail through the apparatus and the required range of its adjustment, depending on the steel grade.

The technical result is achieved by a method for heat treatment of a rail, comprising preheating of the head, the web and the foot of the rail; postheating, cooling the rail over its section successively to a temperature facilitating obtainment of highly dispersed pearlite, ***according to the invention*** the control of the heating is carried out continuously or intermittently by means of individual induction heating devices with the possibility of carrying out a retention in the intervals therebetween for equalizing the temperatures of the surface and inner volumes over the cross-section of the rail, wherein the preheating is carried out from the austenitization start temperature, point Ac₁, to the austenitization end temperature, point Ac₃; wherein the preheating is started from the surface layers providing a phased transformation of small volumes of material as the heat-through front moves into the depth of the rail, while the postheating of the head, the web and the foot of the rail is carried out by thermal cycling in the α-γ phase transformation region, wherein after completion of the cooling, which facilitates the obtainment of the highly dispersed perlite a self-tempering is carried out to remove stresses, and subsequently an additional cooling of the rail to a temperature of ≤ 250°C with adjustment of parameters of a gaseous cooling medium supplied over different surfaces of the rail and a final cooling ef-to a temperature below 60°C are carried out.

Furthermore, in the claimed method a predetermined temperature is maintained after thermal cycling, facilitating a homogenization of the austenite.

Furthermore, in the claimed method the cooling capacity of the gaseous cooling medium is adjusted depending on the air temperature and humidity, and also depending on the chemical composition of the steel and the rail temperature at the entry to the cooling zone.

The technical result is achieved on an apparatus for heat treating of a rail, comprising individual induction heating devices in preheating and postheating zones and cooling modules, *according to the invention* the apparatus is provided with a self-tempering zone, an additional device for additional cooling and a device for final forced cooling, which are successively arranged after the cooling modules, wherein the heating devices having independent control and intermediate cooling portions are arranged in the postheating zone to carry out thermal cycling of the rail in the α-γ phase transformation region, wherein each cooling module comprises a device for forming a gaseous cooling medium with a unit for controlling and adjusting the cooling parameters of the gaseous cooling medium, wherein an automated control system is provided to transmit a signal to an air and water supply system in accordance with a predetermined rail cooling mode, which through the control units supplies the predetermined amount of air and water for forming the gaseous cooling medium supplied by means of the cooling modules to the rail.

Furthermore, in the claimed apparatus each heating device is adjusted independently.

Furthermore, in the claimed apparatus each cooling module comprises a unit for controlling and adjusting the parameters of the gaseous cooling medium supplied over different surfaces of the rail depending on the cooling mode predetermined for each rail cooling module, facilitating a change in the rail cooling speed in different phases of the cooling mode.

Furthermore, in the claimed apparatus there are mechanisms for shifting and/or centering the rail arranged outside the heating devices and also additionally installed in the cooling modules, wherein in the shifting mechanism the adjustment of the rail head is carried out by a non-driven roller with an adjustable drawing force.

Furthermore, in the claimed apparatus the shifting mechanisms stabilise the shifting speed of the rail through the apparatus and facilitate the required range of its adjustment depending on the steel grade.

### Execution of the invention

Fig. 1 shows a schematic representation of the apparatus for heat treating of rails, implementing the claimed method with respect to a heat treating mode shown as a graph in Fig. 1a.
   The apparatus in Fig. 1 comprises:
      1. a rail;
      2. a transport device;
      3. a device for supplying and shifting the rail;
      4. heating devices for preheating,
      5. heating devices of the thermal cycling zone;
      6. cooling portions in the thermal cycling zone;
      7. heating devices of the homogenization zone;
      8. cooling modules of the hardening zone;
      9. a rail centering mechanism;
      10. an additional device for differentiated cooling;
      11. a device for final forced cooling.

      I is the preheating zone;
      II is the thermal cycling zone;
      III is the homogenization zone;
      IV is the temperature equalization zone;
      V is the cooling zone;
      VI is the self-tempering zone;
      VII is the additional differentiated cooling zone;
      VIII is the final forced cooling zone.
   The graph of the heat treatment of the rails according to the claimed method in Fig. 1a is a graph of the temperature change of the surface and centre of the rail head while it passes through the preheating zone I, the thermal cycling zone II, the homogenization zone III, the temperature equalization zone IV, the cooling zone V and the self-tempering zone VI, the additional differentiated cooling zone VII and the final forced cooling zone VIII.
Fig. 2 shows the arrangement of the heating elements in the heating devices of zones I and II, wherein
   1 is the rail;
   12 is the heating element of the rail head;
   13 is the heating element of the rail web;
   14 is the heating element of the rail foot.
Fig. 3 shows the arrangement of the heating elements in the heating devices of zone III:
   1 is the rail;
   12 is the heating element of the rail head;
   14 is the heating element of the rail foot.
Fig. 4 shows schematically the cooling zone, where:
   1 is the rail;
   8 are the cooling modules;
   15 are the devices for forming the gaseous cooling medium with the unit for controlling and adjusting the cooling parameters;
   16 is the unit for controlling the air and water parameters;
   17 is the air and water supply system;
   18 is the automated control system (ACS).

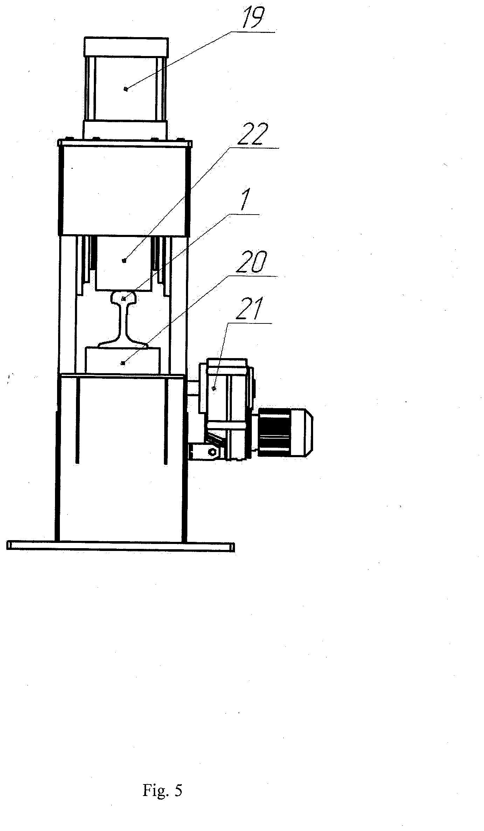

Fig. 5 shows the device for supplying and shifting the rail (end view), wherein:
   1 is the rail;
   19 is the setting mechanism for the upper roller;
   20 is the lower guide roller with a drive,
   21 is the drive mechanism of the lower guide roller;
   22 is the upper roller.

The description of the function of the claimed apparatus explains the execution of the claimed method.

The rail 1 is transported by means of the transportation device 2, which can have the form of a roller conveyor for example, to the supplying and shifting device 3 (Fig. 5). The supplying and shifting device 3 shifts the rail to the heating zone with a speed predetermined according to the heat treatment mode, without damaging the contact surface of the rail. The shifting mechanisms 3 stabilize the rail shifting speed through the apparatus and provide the required range of its adjustment depending on the steel grade.

Induction heating with high-frequency currents is used as the heating method. The heating is done at different speeds depending on the steel grade, continuously and/or intermittently according to the programmed mode, with the aim of obtaining a more homogenous heating of each cross-section of the rail and an equalization of the temperature not only over the rail head section but also over the web and foot sections, to minimize thermal stresses and deformations of the rail during heating. The head and foot differ in mass and configuration, hence their heating is carried out at different speeds, while the heating of the foot is carried out in accordance with a predetermined rule according to the head heating mode to avoid bending of the rail.

In the preheating zone I with individual induction heating devices 4 having independent control (not shown in Fig. 1) the rail is heated to austenitization start temperature (point Ac₁) without exceeding the austenitization end temperature (point Ac₃) so that during heat-through, starting from the surface layers, a phased transformation of small volumes of material is provided as the heat-through front moves into the depth of the rail, due to which the internal stresses are reduced, eliminating the possibility of thermal microcracks occurring and reducing the bending of the rail.

The heating in the preheating zone I is carried out as follows.

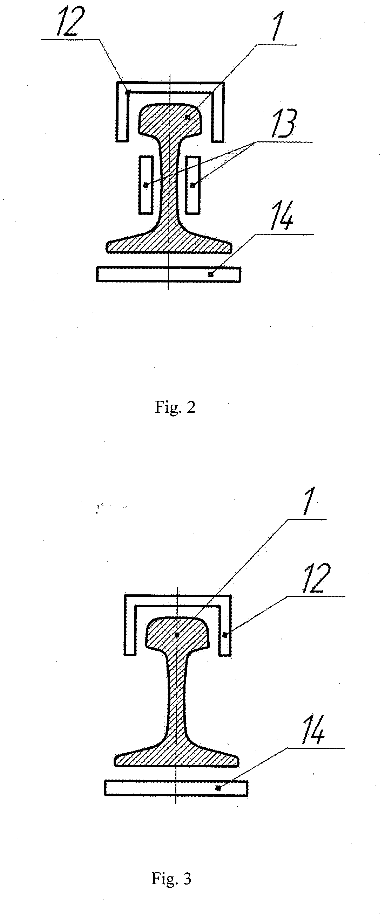

When the rail 1 is shifted through the apparatus (Fig. 1), each of its cross-sections passes through the first heating device 4 for preheating, the surface layers of the rail head are heated by the heating elements 12 (Fig. 2) to a predetermined temperature T₁ according to a programmed mode, for a period τ₁. During this period τ₁ the centre of the rail head is heated through by heat transfer to a temperature t₁ (Fig. 1a).

The heating of the other rail profile elements (web and foot) is carried out with its independent heating elements 13 and 14 (Fig. 2). The heating of the foot and the web is carried out according to a predetermined rule according to the heating mode of the head, to avoid bending of the rail.

Furthermore, this cross-section passes through the first zone of equalization of the gradient of the temperature in the depth and in the section of the rail (not shown in Fig. 1). In this zone an interim cooling of the surface of all elements of the rail profile 1 is carried out in places where there are no heating devices 4. At the point in time τ₂ when a given cross-section of the rail exits this zone of equalization of the gradient of the temperature in the depth and in the section of the rail, the temperature of the rail head surface is T₂ and that of the centre is t₂, wherein T₁ ≥ T₂ and t₁ ≤ t₂, and correspondingly the temperature gradient Δ₂ of the surface and the centre of the rail head at the point in time τ₂ equalling Δ₂ = T₂ - t₂ is smaller than the temperature gradient Δ₁ of the surface and centre of the rail head at the point in time τ₁ equalling Δ₁ = T₁ - t₁. Analogous operations also occur with the temperature gradient in the other rail profile elements.

Furthermore, this cross-section of the rail 1 enters the subsequent heating device 4 and, passing through it, the surface of the head is heated to a temperature T₃, and the centre to t₃, and thereafter, when it passes into the subsequent zone of equalization of the gradient of the temperature in the depth and in the section of the rail, there is a reduction in the difference of the temperature of the surface and the centre of the rail head, and so on. By setting the heating modes for the heating elements 12, 13, 14 (Fig. 2) in the preheating zone I a minimum gradient of the temperature in the depth and in the section of the rail can be achieved.

Thereafter the rail is passed into the zone II with individual heating devices 5 and intermediate cooling portions 6, where the thermal cycling is carried out in the temperature interval of the α-γ phase transformation. The independent control of the heating devices 5 in the zone II (not shown in Fig. 1) makes it possible to set the required thermal cycling rule of each cross-section of the rail depending on the chemical composition of the steel, so as to obtain good physical and mechanical properties and a reduction of internal stresses causing the rail to bend. Thus a homogenous and even fine-grain austenite structure is obtained in the entire volume of each cross-section of the rail.

The arrangement of the independent heating elements in the heating devices of zone I and zone II is shown in Fig. 2, where the rail 1 is evenly heated in a differentiated way over its section by the heating elements 12, 13, 14 having independent control (not shown in Fig. 2). The independent control of the heating elements makes it possible to set a heating mode for each rail profile element according to a predetermined rule and to change it depending on the chemical composition of the steel.

Further, the rail is passed into zone III for homogenization of the austenite, heating with individual heating devices 7 to a temperature exceeding austenitization temperature (p. Ac₃) and retention at that temperature for homogenization of the austenite. The arrangement of the heating elements in the heating devices of zone III is shown in Fig. 3, where the head and foot of the rail 1 are heated by individually adjustable heating elements 12 and 14, respectively.

In the heating zones I, II and III the heating of the rail is carried out by means of heating the surface layers of the rail, while the through-heating of the inner volumes of the rail is done by heat transfer. Therefore the rail heating mode is predetermined for each steel grade in every zone with a speed facilitating an insignificant drop between the temperature of the surface and of the inner layers. Moreover between the individual heating devices 4, 5, 7 there are zones of equalization of the gradient of the temperature of the depth and of the section of the rail (not shown in Fig. 1).

Thereafter the rail is passed into the final temperature equalization and control zone IV, where the rail surface undergoes interim cooling under natural conditions to a temperature not below Ar₁.

Further, the rail is passed into the cooling zone V with individual cooling modules 8, where adjusted cooling at different speeds is carried out depending on the steel grade, continuously and/or intermittently according to the programmed mode so as to obtain a highly dispersed pearlite and good physical and mechanical properties in the steel structure.

The mode of cooling the head as well as the other rail profile elements consists of several phases.

In the first phase, during intensive cooling, a cooling speed of the head surface is provided in which the temperature of the rail head surface is reduced from heating temperature to a temperature of minimum austenite stability, for a time not exceeding the length of the incubation period for pearlite transformation.

In the second cooling phase the cooling speed is reduced to a level that facilitates a full pearlite transformation in the surface layers.

Further, the cooling speed is gradually increased to facilitate the formation of a highly dispersed pearlite in accordance with the phase transformation advance into the depth of the head.

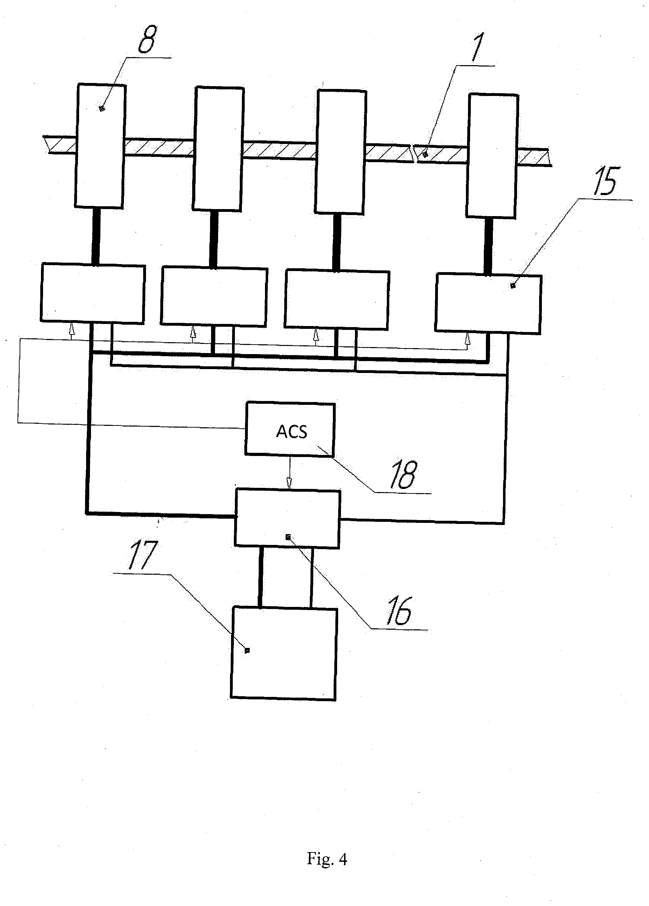

The programmed cooling mode is selected from a database in accordance with the actual (measured) temperature of the rail surface and the steel grade. The functional scheme of the cooling zone V is shown in Fig. 4. An automated control system 18 with a database of the heat treatment modes transmits a signal to the air and water supply system 17 in accordance with the predetermined rail cooling mode, which through control units 16 supplies the predetermined amount of air and water for forming a gaseous cooling medium supplied by means of the cooling modules 8 to the rail 1. By means of a cooling parameter control and adjustment unit each device 15 forms the predetermined composition of the gaseous cooling medium for its cooling module 8, which makes it possible to provide the required cooling speed of the rail 1 when it passes through the given cooling module 8 according to the programmed cooling mode in the given cooling phase. This makes it possible to obtain the required cooling speed in accordance with the predetermined cooling mode of the rail as it advances through the cooling zone V. A sufficiently wide adjustment range of the cooling speeds (2÷14.5°C/s) makes a heat treatment of rails of carbon non-alloy and alloy steels possible. The rail from the cooling zone V, having completed the pearlite transformations over the entire volume of the given section, passes into the self-tempering zone VI.

At the exit of zone V stands the supply and shift device 3 (Fig. 5), which shifts the rail at a speed predetermined according to the heat treatment mode without damaging the contact surface of the rail (by adjusting the rail head, which is done by a non-driven roller (not shown) with adjustable drawing force) to the transport device 2, which can be formed, for instance, as a roller conveyor. Shift mechanisms 3 stabilize the speed of shifting the rail through the apparatus and provide the required range for its adjustment depending on the steel grade.

Having passed through the self-tempering zone VI, the rail 1 passes into zone VII, where by means of an additionally arranged device 10 an additional differentiated cooling to a temperature below 250°C is carried out, which makes it possible to avoid thermal warping and a subsequent straightening in a roller-straightening machine (reduction of stresses). Further, in zone VIII, where the device 11 is additionally arranged, a forced final cooling to a temperature below 60°C is carried out, which makes it possible to avoid a retention operation of the rail, in a refrigerator for a period of 2-4 hours.

In the heating zones I, II, III, the temperature equalization zone IV and the cooling zone V between the individual heating devices and cooling modules, rail-centering mechanisms 9 are arranged, preventing damage to the contact surface of the rail head. When the rail is moved through the apparatus, the centering mechanisms 9 prevent its possible bending at high temperatures (particularly in moments of phase transformations) effected by gravity.

The proposed heat treating method is executed on full-profile samples of 1200 mm in length, taken from steel rails the chemical composition of which is given in Table 1.

**Table 1: Chemical steel composition, mass %**

| Se**rial** no. | Steel grade | C | Mn | Si | P | s | Cr | Ni | Cu | Al | V | Ti | Mo | [N] |
|---|---|---|---|---|---|---|---|---|---|---|---|---|---|---|
| 1 | 76F | 0.76 | 0.95 | 0.37 | 0.012 | 0.005 | 0.037 | 0.107 | 0.013 | 0.005 | 0.052 | 0.003 | <0.005 | 0.0086 |
| 2 | 76HF | 0.78 | 0.97 | 0.35 | 0.010 | 0.009 | 0.277 | 0.115 | 0.009 | 0.0038 | 0.056 | 0.003 | <0.005 | 0.0077 |
| 3 | 76HAF | 0.77 | 0.83 | 0.83 | 0.014 | 0.010 | 0.53 | 0.020 | 0.020 | 0.001 | 0.040 | - | <0.005 | 0.013 |
| 4 | 90HAF | 0.92 | 0.96 | 0.32 | 0.012 | 0.009 | 0.430 | 0.09 | 0.017 | 0.004 | 0.08 | 0.002 | <0.005 | 0.014 |

The heat treatment of the rail samples was carried out in apparatus schematically shown in Fig. 1 according to the programmed mode shown in Fig. 1a.

To assess the quality of the heat treatment of the rails, the microstructure of the head, the strength and plastic properties, the hardness, and the impact strength were determined. The obtained results are given in Table 2.

**Table 2: Microstructure and mechanical properties of the rail samples**

| **Method** | **Serial no.** | **Steel** | **Microstructure** | **Pearlite colony size, points** | **σ_{B}, N/mm²** | **σ_{T}, N/mm²** | **δ, %** | **ψ, %** | **Hardness, HB** | | | **KCU, J/cm²** | **Endurance limit, technical specification** |
|---|---|---|---|---|---|---|---|---|---|---|---|---|---|
| | | | | | | | | | **head contact surface** | **at depth of 10 mm** | **at depth of 22 mm** | | |
| claimed | 1 | 76F | HDP* | 11-12 | 1344 | 996 | 13 | 40 | 388 | 375 | 361 | 36 | 56.0 |
| claimed | 2 | 76HF | HDP* | 11-12 | 1358 | 1000 | 15 | 44 | 400 | 388 | 375 | 42 | 58.6 |
| claimed | 3 | 76HAF | HDP* | 12-13 | 1385 | 1010 | 13 | 41 | 401 | 390 | 388 | 40 | 57.8 |
| claimed | 4 | 90HAF | HDP* | 12-13 | 1412 | 1057 | 12 | 42 | 415 | 395 | 370 | 37 | 59.2 |
| * HDP - Highly dispersed pearlite | | | | | | | | | | | | | |

The measurements of the curvilinearity of the rail samples after heat treatment showed an increase of the initial bending by 0.02 mm for a length of 1 meter.

## Claims

1. Method for heat treating of a rail (1), comprising
- preheating of the head, the web and the foot of the rail (1);
- postheating,
- cooling the rail (1) over its section successively to a temperature facilitating obtainment of a highly dispersed pearlite,
***characterised in that***
the control of the heating is carried out continuously or intermittently by means of individual induction heating devices (4, 5) with the possibility of carrying out a retention in the intervals therebetween for equalizing the temperatures of the surface and inner volumes over the cross-section of the rail (1),
wherein the preheating is carried out to a temperature from the austenization start temperature, point Ac₁, without exceeding the austenitization end temperature, point Ac₃, wherein the preheating is started from the surface layers providing a phased transformation of small volumes of material as the heat-through front moves into the depth of the rail,
while the postheating of the head, the web and the foot of the rail (1) is carried out by thermal cycling in the α-γ phase transformation region,
wherein after completion of the cooling, which facilitates the obtainment of the highly dispersed perlite, a self-tempering is carried out to remove stresses, and subsequently an additional cooling of the rail to a temperature of ≤ 250°C with adjustment of parameters of a gaseous cooling medium supplied over different surfaces of the rail (1) and a final cooling to a temperature below 60°C are carried out.

2. Method according to claim 1, **characterised in that** a predetermined temperature is maintained after thermal cycling, facilitating a homogenization of the austenite.

3. Method according to claim 1, **characterised in that** the cooling capacity of the gaseous cooling medium is adjusted by a predetermined amount of air and water depending on the air temperature and humidity, and also depending on the chemical composition of the steel and the rail temperature at the entry to the cooling zone (V).

4. Apparatus for heat treating of a rail (1), comprising
- individual induction heating devices (4, 5) in preheating (I) and postheating (II, III, IV) zones and
- cooling modules (8),
***characterised in that***
the apparatus is provided with a self-tempering zone (VI), an additional device (10) for additional cooling and a device (11) for final forced cooling, which are successively arranged after the cooling modules (8),
while the heating devices (4, 5) are arranged with intervals, wherein the heating devices (5) having independent control and intermediate cooling portions (6) are arranged in the postheating zone (II) to carry out thermal cycling of the rail in the α-γ phase transformation region,
wherein each cooling module (8) comprises a device (15) for forming a gaseous cooling medium with a unit (16) for controlling and adjusting parameters of the gaseous cooling medium,
wherein an automated control system (18) is provided to transmit a signal to an air and water supply system (17) in accordance with a predetermined rail cooling mode, which, through the control units (16), supplies the predetermined amount of air and water for forming the gaseous cooling medium supplied by means of the cooling modules (8) to the rail (1).

5. Apparatus according to claim 4, **characterised in that** each heating device (4, 5) is adjusted independently.

6. Apparatus according to claim 4, **characterised in that** each cooling module (8) comprises the unit (16) for controlling and adjusting the parameters of the gaseous cooling medium supplied over different surfaces of the rail (1) depending on the cooling mode predetermined for each individual rail cooling module (8), adapted to change the rail cooling speed in different phases of the cooling mode.

7. Apparatus according to claim 4, **characterised in that** mechanisms (3, 9) for shifting and/or centering the rail (1) are arranged outside the heating devices (4, 5) and also additionally installed in the cooling modules (8), wherein the tightening of the rail head is carried out by a non-driven roller with an adjustable drawing force.

8. Apparatus according to claim 7, **characterised in that** the shifting mechanisms (3) are adapted to stabilise the shifting speed of the rail (1) through the apparatus and facilitate the required range of its adjustment depending on the steel grade.

## Patentansprüche

1. Verfahren zum Wärmebehandeln einer Schiene (1), umfassend
- Vorheizen des Kopfes, des Stegs und des Fußes der Schiene (1);
- Nachheizen;
- sukzessives Kühlen der Schiene (1) im Querschnitt bis zu einer Temperatur, die den Erhalt eines hochdispersen Perlits gewährleistet,
***dadurch gekennzeichnet, dass***
die Steuerung des Erhitzens kontinuierlich oder periodisch mittels einzelner Induktionsheizvorrichtungen (4, 5) ausgeführt wird mit der Möglichkeit der Vornahme eines Ausgleichens in den Zwischenräumen dazwischen zum Angleichen der Temperaturen der Oberflächen- und der Innenvolumina über den Querschnitt der Schiene (1),
wobei das Vorheizen ausgeführt wird bis zu einer Temperatur ab der Austenitisierungsstarttemperatur, Punkt Ac₁, ohne eine Überschreitung der Austenitisierungsendtemperatur, Punkt A_{C3}, wobei das Vorheizen von den Oberflächenschichten beginnt unter Gewährleistung einer phasenweisen Umwandlung kleiner Materialvolumina beim Bewegen der Durchheizfront in die Tiefe der Schiene (1),
während das Nachheizen des Kopfes, des Stegs und des Fußes der Schiene (1) mittels Temperaturwechselbeanspruchung im Bereich der α-γ Umwandlungsphase ausgeführt wird,
wobei nach dem Abschluss der Kühlung, die den Erhalt des hochdispersen Perlits gewährleistet, ein Selbstanlassen zur Beseitigung von Spannungen ausgeführt wird, und danach ein zusätzliches Abkühlen der Schiene bis zu einer Temperatur von ≤ 250°C erfolgt unter Anpassung der Parameter eines gasförmigen Kühlmediums, das über unterschiedliche Oberflächen der Schiene (1) gegeben wird, und ein abschließendes Abkühlen bis zu einerTemperatur unter 60°C ausgeführt wird.

2. Verfahren nach Anspruch 1, **dadurch gekennzeichnet, dass** eine vorbestimmte Temperatur nach der Temperaturwechselbeanspruchung gehalten wird, wobei eine Homogenisierung des Austenits gewährleistet wird.

3. Verfahren nach Anspruch 1, **dadurch gekennzeichnet, dass** die Kühlfähigkeit des gasförmigen Kühlmediums mit einer vorbestimmten Menge von Luft und Wasser abhängig von der Lufttemperatur und -feuchtigkeit eingestellt wird, sowie abhängig von der chemischen Zusammensetzung des Stahls und der Schienentemperatur am Eingang in den Kühlbereich (V).

4. Vorrichtung zur Wärmebehandlung einer Schiene (1), umfassend
- einzelne Induktionsheizvorrichtungen (4, 5) in Vorheiz- (I) und Nachheizbereichen (II, III, IV) und
- Kühlmodule (8),
***dadurch gekennzeichnet, dass***
die Vorrichtung mit einem Selbstanlassbereich (VI), einer zusätzlichen Vorrichtung (10) zum zusätzlichen Kühlen und einer Vorrichtung (11) zum abschließenden Zwangskühlen versehen ist, die nacheinander nach den Kühlmodulen (8) angeordnet sind,
während die Heizvorrichtungen (4, 5) mit Zwischenräumen angeordnet sind,
wobei die Heizvorrichtungen (5) mit unabhängiger Steuerung und Zwischenkühlbereichen (6) in dem Nachheizbereich (II) angeordnet sind zur Ausführung einer Temperaturwechselbeanspruchung der Schiene im Bereich der α-γ Umwandlungsphase,
wobei jedes Kühlmodul (8) eine Vorrichtung (15) zur Bildung eines gasförmigen Kühlmediums mit einer Einheit (16) zur Steuerung und Einstellung der Parameter des gasförmigen Kühlmediums umfasst,
wobei ein automatisiertes Steuersystem vorgesehen ist zur Übertragung eines Signals zu einem Luft- und Wasserzuführsystem (17) entsprechend einem vorbestimmten Schienenkühlmodus, der durch die Steuereinheiten (16) die vorbestimmte Menge von Luft und Wasser zur Bildung des gasförmigen Kühlmediums leitet, das mittels der Kühlmodule (8) zu der Schiene (1) geleitet wird.

5. Vorrichtung nach Anspruch 4, **dadurch gekennzeichnet, dass** jede Heizvorrichtung (4, 5) unabhängig eingestellt wird.

6. Vorrichtung nach Anspruch 4, **dadurch gekennzeichnet, dass** jedes Kühlmodul (8) die Einheit (16) zur Steuerung und Einstellung der Parameter des gasförmigen Kühlmediums umfasst, das über unterschiedliche Oberflächen der Schiene (1) abhängig von dem für jedes einzelne Schienenkühlmodul (8) voreingestellten Kühlmodus gegeben wird, angepasst zum Ändern der Schienenkühlgeschwindigkeit in unterschiedlichen Phasen des Kühlmodus.

7. Vorrichtung nach Anspruch 4, **dadurch gekennzeichnet, dass** Mechanismen (3, 9) zum Verschieben und/oder Zentrieren der Schiene (1) außerhalb der Heizvorrichtungen (4, 5) angeordnet sowie zusätzlich in den Kühlmodulen (8) montiert sind, wobei das Festziehen des Schienenkopfes durch eine nicht angetriebene Walze mit einer einstellbaren Ziehkraft ausgeführt wird.

8. Vorrichtung nach Anspruch 7, **dadurch gekennzeichnet, dass** die Verschiebemechanismen (3) zum Stabilisieren der Verschiebegeschwindigkeit der Schiene (1) durch die Vorrichtung und zum Gewährleisten des erforderlichen Umfangs ihrer Einstellung in Abhängigkeit von der Stahlart angepasst sind.

## Revendications

1. Procédé de traitement thermique d'un rail (1), comprenant
- le préchauffage du champignon, de la bande et du socle du rail (1) ;
- un post-chauffage,
- le refroidissement du rail (1) sur sa section successivement à une température qui facilite l'obtention d'une perlite hautement dispersée,
**caractérisé en ce que**
le contrôle du chauffage est effectué en continu ou par intermittence à l'aide de dispositifs de chauffage par induction individuels (4, 5) avec la possibilité d'effectuer une rétention dans les intervalles situés entre ceux-ci de façon à égaliser les températures de la surface et des volumes internes sur la section transversale du rail (1),
dans lequel le préchauffage est effectué à une certaine température en partant de la température de lancement d'austénitisation, à un point Ac₁, sans dépasser la température de fin d'austénitisation, au point Ac₃, dans lequel le préchauffage est lancé à partir des couches de surface en effectuant une transformation progressive de petits volumes de matériau au fur et à mesure que le front de chaleur se déplace dans la profondeur du rail,
pendant que le post-chauffage du champignon, de la bande et du socle du rail (1) est effectué par cyclage thermique dans la zone de transformation de phase α-γ,
dans lequel, après le refroidissement, qui facilite l'obtention de la perlite hautement dispersée, une auto-trempe est effectuée afin d'éliminer les contraintes, puis un refroidissement supplémentaire du rail à une température ≤ 250°C avec ajustement des paramètres d'un milieu de refroidissement gazeux fourni sur différentes surfaces du rail (1), et un refroidissement final à une température inférieure à 60°C sont effectués.

2. Procédé selon la revendication 1, **caractérisé en ce qu'**une température prédéterminée est maintenue après le cyclage thermique, afin de faciliter l'homogénéisation de l'austénite.

3. Procédé selon la revendication 1, **caractérisé en ce que** la capacité de refroidissement du milieu de refroidissement gazeux est ajustée par une quantité prédéterminée d'air et d'eau selon la température et l'humidité de l'air, et selon la composition chimique de l'acier et la température du rail à l'entrée de la zone de refroidissement (V).

4. Appareil de traitement thermique d'un rail (1), comprenant :
- des dispositifs de chauffage par induction individuels (4, 5) dans des zones de préchauffage (I) et de post-chauffage (II, III, IV), et
- des modules de refroidissement (8),
**caractérisé en ce que**
l'appareil est équipé d'une zone d'auto-trempe (VI), d'un dispositif supplémentaire (10) destiné au refroidissement supplémentaire et d'un dispositif (11) destiné au refroidissement forcé final, qui sont disposés successivement après les modules de refroidissement (8),
tandis que les dispositifs de chauffage (4, 5) sont disposés avec des intervalles,
dans lequel les dispositifs de chauffage (5) qui possèdent une commande indépendante et des parties de refroidissement intermédiaires (6) sont disposés dans la zone de post-chauffage (II) afin d'effectuer un cyclage thermique du rail dans la zone de transformation de phase α-γ,
dans lequel chaque module de refroidissement (8) comprend un dispositif (15) destiné à former un milieu de refroidissement gazeux avec une unité (16) de commande et d'ajustement des paramètres du milieu de refroidissement gazeux,
dans lequel un système de commande automatisé (18) est prévu afin de transmettre un signal à un système d'alimentation en air et en eau (17) selon un mode de refroidissement du rail prédéterminé, qui, par le biais des unités de commande (16), fournit la quantité d'air et d'eau prédéterminée afin de former le milieu de refroidissement gazeux fourni à l'aide des modules de refroidissement (8) au rail (1).

5. Appareil selon la revendication 4, **caractérisé en ce que** chaque dispositif de chauffage (4, 5) est réglé de manière indépendante.

6. Appareil selon la revendication 4, **caractérisé en ce que** chaque module de refroidissement (8) comprend l'unité (16) destinée à commander et à ajuster les paramètres du milieu de refroidissement gazeux fourni sur différentes surfaces du rail (1) selon le mode de refroidissement prédéterminé pour chaque module de refroidissement de rail individuel (8), adaptée pour changer la vitesse de refroidissement du rail lors des différentes phases du mode de refroidissement.

7. Appareil selon la revendication 4, **caractérisé en ce que** des mécanismes (3, 9) destinés à décaler et/ou centrer le rail (1) sont disposés à l'extérieur des dispositifs de chauffage (4, 5) et sont en outre installés dans les modules de refroidissement (8), dans lequel le serrage du champignon de rail est effectué par un galet non entraîné avec une force de traction réglable.

8. Appareil selon la revendication 7, **caractérisé en ce que** les mécanismes de décalage (3) sont adaptés pour stabiliser la vitesse de décalage du rail (1) au sein de l'appareil et faciliter sa plage de réglage requise selon la qualité de l'acier.
